# EUROPÄISCHE PATENTSCHRIFT

(11) **EP 2 998 339 B1**
(45) Veröffentlichungstag und Bekanntmachung des Hinweises auf die Patenterteilung: **30.01.2019**
(21) Anmeldenummer: 15181946.3
(22) Anmeldetag: 21.08.2015
(51) Int. Cl.: C08G 73/02, C08L 77/02, C08L 77/06, C08L 79/02, C09D 177/02, C09D 177/06, C09D 179/02, C08L 77/00, F16L 57/06, F16L 58/10, F16L 9/147, F16L 11/04, C08J 5/00

(54) **METALLISCHES ROHR MIT EINER HYDROLYSESTABILISIERTEN SCHICHT AUS EINER POLYAMIDFORMMASSE**
METALLIC PIPE HAVING A HYDROLYSIS-RESISTANT LAYER OF A POLYAMIDE MOULDING COMPOSITION
TUBE METALLIQUE DOTE D'UNE COUCHE HYDROSTABILISEE A PARTIR D'UNE MASSE MOULEE EN POLYAMIDE

(30) Priorität: 26.08.2014 EP 14182218
(43) Veröffentlichungstag der Anmeldung: 23.03.2016
(60) Teilanmeldung: 17199821.4
(73) Patentinhaber: Evonik Degussa GmbH, 45128 Essen (DE)
(72) Erfinder: FRANOSCH, Jürgen, 45770 Marl (DE); BAUMANN, Franz-Erich, 48249 Dülmen (DE); BEYER, Horst, 45770 Marl (DE); DOWE, Andreas, 46539 Dinslaken (DE); PAWLIK, Andreas, 45657 Recklinghausen (DE)

(56) Entgegenhaltungen:
- EP-A1- 2 581 947
- EP-A1- 2 610 279
- EP-A1- 2 660 295
- EP-A2- 1 065 048
- EP-A2- 1 170 334
- EP-A2- 1 216 823
- EP-A2- 1 216 826
- WO-A1-2006/040206
- DE-A1-102008 044 224
- BUCCELLA M ET AL: "Thermo-mechanical properties of Polyamide 6 chemically modified by chain extension with Polyamide/Polycarbonate blend", JOURNAL OF POLYMER RESEARCH, KLUWER ACADEMIC PUBLISHERS-CONSULTANTS BUREAU, NL, Bd. 19, Nr. 8, 18. Juli 2012 (2012-07-18), Seiten 1-9, XP035096796, ISSN: 1572-8935, DOI: 10.1007/S10965-012-9935-0
- DAI L X ET AL: "PA6 obtained by polymerization with trifunctional regulators and its DSC results", JOURNAL OF DONG HUA UNIVERSITY (ENGLISH EDITION)DECEMBER 2000EDITORIAL BOARD OF JOURNAL OF DONG HUA UNIVERSITYCN,, Bd. 17, Nr. 4, 1. Dezember 2000 (2000-12-01), Seiten 16-19, XP009189927,
- KATSUAKI KUZE, SHINJI MIWA: "Synthesis of Polyamide Having Aromatic Ring in Main Chain, III. The Formation of Imino Linkage in the Preparation of Polyamide", KOBUNSHI KAGAKU, THE SOCIETY OF POLYMER SCIENCE, JAPAN, Bd. 25, Nr. 277, 1968, Seiten 318-324, XP002757428,

## Beschreibung

Die Erfindung betrifft ein metallisches Rohr, das eine hydrolysestabile Schicht aus einer Polyamidformmasse enthält, die Verwendung eines derartigen Rohrs für die Beförderung eines hydrolysierend wirkenden Mediums, eine für den Kontakt mit einem hydrolysierend wirkenden Medium geeignete hydrolysestabile Polyamidformmasse sowie Formteile hieraus.

Polyamide und insbesondere Polyamide mit einer niedrigen Konzentration an Carbonamidgruppen wie PA11 und PA12 haben aufgrund ihres Eigenschaftsprofils vielfältige technische Einsatzgebiete gefunden. Hier sind unter anderem Leitungen zum Transport von Kühlmitteln in der Automobilindustrie oder auch Inliner im Bereich der Offshore-Ölförderung zu nennen, bei denen insbesondere eine gute Hydrolysebeständigkeit gefragt ist. Für derartige Anwendungen werden allerdings in zunehmendem Maße Materialien mit noch höherer Hydrolysebeständigkeit insbesondere bei höheren Temperaturen verlangt.

In Mehrschichtkonstruktionen werden häufig Sperrschichten zur Lösung dieser Aufgabe verwendet, so offenbart EP1216826A2 EVOH als Sperrschicht, während die Rückseitenabdeckung von Photovoltaik-Zellen mit einem Polyamid-Polyester Mehrschichtverbund in EP2581947 realisiert wird.

Aus der US 5 850 855 ist eine Kühlflüssigkeitsleitung für Automobile bekannt, bei der die Außenschicht aus einem Polyamid mit Aminoendgruppenüberschuss besteht. Dadurch soll die Hydrolysestabilität verbessert werden. Allerdings wird bei derartigen durch Coextrusion erzeugten Rohren eine Formmasse mit hoher Schmelzeviskosität eingesetzt, das heißt, dass das Polyamid wegen des damit verbundenen hohen Molekulargewichts nur eine geringe Konzentration an Endgruppen besitzt. Liegt hier ein Aminoendgruppenüberschuss vor, so ist dieser schon rein mengenmäßig nicht ausreichend wirksam. Zudem ist diese Lösung auf Rohre mit kleinem Durchmesser beschränkt, wie sie bei Automobilanwendungen typisch sind.

Bei der Extrusion von Rohren, Profilen und anderen Hohlkörpern kann es jedoch, insbesondere bei großdimensionalen Geometrien, nach dem Austritt der Schmelze aus dem Werkzeug zu diversen Schwierigkeiten kommen, die unter anderem durch die Gravitationskraft bedingt sind. Ein Durchhängen des austretenden Schmelzeschlauches ist hier ein optisches Zeichen für eine niedrige Schmelzeviskosität. Die Schwerkraft führt zu einer Verschiebung der Wanddicken, so dass eine unregelmäßige Verteilung der Wanddicke des Hohlkörpers auftreten kann. Zudem sind die erzielbaren Geometriegrößen und Geometrieformen bei der Profilextrusion stark begrenzt. Die Schmelzesteifigkeit herkömmlicher Polyamide reicht hier nicht aus, um die bevorzugten Geometrien technisch, wirtschaftlich, maßhaltig und zuverlässig herstellen zu können. Eine niedrige Schmelzesteifigkeit führt darüber hinaus zu einem unruhigen, instabilen Extrusionsverlauf, der sich dadurch äußern kann, dass der Schmelzestrang unruhig in die Kalibriereinheit einläuft. Dies kann zu Produktionsstörungen führen. Besitzt der Schmelzeschlauch nach Verlassen der Düse hingegen eine hohe Schmelzesteifigkeit, läuft er deutlich stabiler und wird unempfindlicher gegenüber äußeren Extrusionseinflüssen. Bei einer vertikalen Extrusion (z. B. Vorformling) darf sich der extrudierte Schmelzeschlauch nicht auslängen, wodurch die Wanddicke reduziert werden würde, und auch nicht abreißen. Die Größe der durch diese Extrusionstechnik produzierbaren Geometrien wird derzeit durch die Schmelzesteifigkeit der eingesetzten Polyamidformmasse limitiert. Um große Dimensionen extrudieren zu können, wird gerade hier eine hohe Schmelzesteifigkeit benötigt.

Die Extrusion einer Polyamidformmasse mit hoher Schmelzesteifigkeit ist wegen der hohen Viskosität jedoch schwierig. Hierfür ist ein außerordentlich hoher Druckaufbau in der Maschine notwendig; trotzdem können auch dann großdimensionale Geometrien nicht bei wirtschaftlich sinnvollen Extrusionsgeschwindigkeiten hergestellt werden, da schon bei kleineren Durchsätzen eine hohe Motorlast vorliegt.

Für dieses Problem wird in der US 8 647 551 und der US 8 580 899 eine Lösung bereitgestellt. Diese Schriften beschreiben ein Verfahren zur Herstellung von Formteilen unter Aufkondensierung einer Polyamidformmasse mit einer Verbindung mit mindestens zwei Carbonateinheiten, wobei eine Vormischung aus der Polyamidformmasse und der Verbindung mit mindestens zwei Carbonateinheiten hergestellt wird und die Vormischung anschließend zum Formteil verarbeitet wird, wobei erst in diesem Schritt die Vormischung aufgeschmolzen wird und die Aufkondensierung erfolgt. Die US 2011/0165358 offenbart darüber hinaus, dass eine Verbindung mit mindestens zwei Carbonateinheiten in einem Masterbatch eingesetzt werden kann, das darüber hinaus ein Polyetheramid enthält, dessen Endgruppen zu mindestens 50 % als Aminogruppen vorliegen. Nachteilig an diesem Verfahren ist, dass bei der Reaktion der Verbindung mit mindestens zwei Carbonateinheiten und dem Polyamid Aminoendgruppen verbraucht werden. Diese stehen dann für die Hydrolysestabilisierung nicht mehr zur Verfügung.

Eine Formmasse mit guter Blasformbarkeit wird in der US 6 677 015 beschrieben; sie besteht zu mindestens 50 Gew.-% aus einem Polyamid, das unter Verwendung von 0,05 bis 2,5 Gew.-% eines Polyamins als Verzweiger hergestellt wird. Diese Formmasse zeigt eine ausgeprägte Strukturviskosität; jedoch ist in dieser Schrift nur die Herstellung von relativ kleinvolumigen Formteilen beschrieben.

Ähnliche Formmassen wie die der US 6 677 015 können gemäß der US 2010/0009106, der US 2010/0300573, der US 2011/0209768 und der US 2011/0165358 zusammen mit einer Verbindung mit mindestens zwei Carbonateinheiten zu Großrohren verarbeitet werden, die als Inliner für Rohrleitungen wie Versorgungsleitungen, Entsorgungsleitungen oder Ölförderleitungen verwendet werden. Die dort eingesetzten Polyamidformmassen können ein Polyamin als Verzweiger enthalten; derartige Formmassen sind jedoch nicht kommerziell verfügbar.

Hydrolysestabilisierte Formteile aus einer Polyamidformmasse sind aus der US 2013/0171388 bekannt. Dort wird beschrieben, dass eine Vormischung aus einer Polyamidformmasse und 0,1 bis 5 Gew.-% eines Oligo- oder Polycarbodiimids zu einem Formteil verarbeitet wird, wobei im Verarbeitungsschritt eine Aufkondensierung, d. h. eine Molekulargewichtserhöhung des Polyamids erfolgt. Auf diese Weise können Formteile mit großdimensionalen Geometrien hergestellt werden, die eine deutlich verbesserte Hydrolysestabilität aufweisen.

Für viele Anwendungszwecke reicht die nach dem bisherigen Stand der Technik erzielbare Hydrolysestabilität von Polyamidformmassen jedoch nicht aus. Insbesondere bei Ölförderleitungen ist die Lebensdauer der darin enthaltenen Inliner ein wirtschaftlich entscheidender Faktor. Dies trifft besonders bei den flexiblen Offshoreleitungen zu, die wegen ihres komplizierten Aufbaus sehr teuer sind. Wenn der Inliner versagt, kann er nicht ohne weiteres ausgetauscht werden. Daher muss die Forderung erfüllt werden, dass die Standzeit des Inliners mindestens so hoch ist wie die vorgesehene Nutzungsdauer der Leitung.

Ein Aspekt der Aufgabe der vorliegenden Erfindung bestand darin, eine Polyamidformmasse sowie Formteile mit signifikant verbesserter Hydrolysebeständigkeit bereitzustellen. Diese verbesserte Hydrolysebeständigkeit sollte auch nach Reaktion eines Teils der Aminoendgruppen mit einem Kettenverlängerer bei der Herstellung von Formteilen mit großen Geometrien weitestgehend erhalten bleiben, so dass verlängerte Standzeiten sowie eine verbesserte Tolerierung von hohen Temperaturen möglich sind. Darüber hinaus sollte es möglich sein, die Formmasse durch einfache Veränderung der Zusammensetzung an die jeweiligen anwendungsbezogenen Erfordernisse anzupassen.

Ein weiterer Aspekt der Aufgabe der vorliegenden Erfindung bestand darin, ein metallisches Rohr mit einer Schicht aus einer hydrolysestabilen Polyamidformmasse zur Verfügung zu stellen, die bei Kontakt mit einem hydrolysierend wirkenden Medium eine erhöhte Lebensdauer besitzt.

Diese Aufgabe wird durch ein metallisches Rohr gelöst, das eine Schicht aus einer Formmasse enthält, die zu mindestens 50 Gew.-%, vorzugsweise zu mindestens 60 Gew.-%, besonders bevorzugt zu mindestens 70 Gew.-%, insbesondere bevorzugt zu mindestens 80 Gew.-% und ganz besonders bevorzugt zu mindestens 90 Gew.-%, jeweils bezogen auf die Polyamidmischung, einen Polyamidanteil enthält, der aus folgenden Komponenten besteht:
I) 60 bis 98 Gew.-Teile, vorzugsweise 65 bis 97 Gew.-Teile, besonders bevorzugt 70 bis 96 Gew.-Teile und ganz besonders bevorzugt 75 bis 95 Gew.-Teile eines Polyamids, das 10 bis 70 mäq/kg, vorzugsweise 14 bis 60 mäq/kg, besonders bevorzugt 18 bis 55 mäq/kg und insbesondere bevorzugt 22 bis 50 mäq/kg Carboxylendgruppen enthält und eine relative Lösungsviskosität ηᵣₑₗ, bestimmt gemäß ISO 307 unter Verwendung einer 0,5 gew.-%igen Lösung in m-Kresol bei 25 °C, von mindestens 1,90, vorzugsweise von mindestens 1,95, besonders bevorzugt von mindestens 2,00 und insbesondere bevorzugt von mindestens 2,05 besitzt sowie
II) 2 bis 40 Gew.-Teile, vorzugsweise 3 bis 35 Gew.-Teile, besonders bevorzugt 4 bis 30 Gew.-Teile und ganz besonders bevorzugt 5 bis 25 Gew.-Teile eines Polyamin-Polyamid-Pfropfcopolymers, das aus folgenden Monomeren hergestellt wird:
   a) 0,5 bis 25 Gew.-%, vorzugsweise 1 bis 20 Gew.-% und besonders bevorzugt 1,5 bis 16 Gew.-%, bezogen auf die gesamte Monomerenmischung, eines Polyamins mit mindestens 4, bevorzugt mindestens 6, besonders bevorzugt mindestens 8 und insbesondere bevorzugt mindestens 11 Stickstoffatomen sowie
   b) 75 bis 99,5 Gew.-%, vorzugsweise 80 bis 99 Gew.-% und besonders bevorzugt 84 bis 98,5 Gew.-%, bezogen auf die gesamte Monomerenmischung, polyamidbildenden Monomeren, ausgewählt aus Lactamen, ω-Aminocarbonsäuren und/oder äquimolaren Kombinationen von Diamin und Dicarbonsäure,
   mit der Maßgabe, dass die Aminogruppenkonzentration des Pfropfcopolymers im Bereich von 100 bis 2 500 mäq/kg, vorzugsweise im Bereich von 200 bis 2 000 mäq/kg und besonders bevorzugt im Bereich von 300 bis 1600 mäq/kg liegt,
   wobei die Summe der Gew.-Teile von I) und II) 100 beträgt,
   wobei in der Formmasse die Kristallitschmelzpunkte Tₘ der einzelnen Komponenten aufeinander zu verschoben sind oder ganz zusammenfallen.

Gegenstand der Erfindung ist auch die Verwendung eines derartigen metallischen Rohrs zur Beförderung eines hydrolysierend wirkenden Mediums. Ein hydrolysierend wirkendes Medium ist insbesondere Wasser, Kühlflüssigkeit, Rohöl (das immer lagerstättenbedingt oder prozessbedingt Wasser enthält), Erdgas oder feuchte Luft, insbesondere bei höheren Temperaturen, etwa oberhalb von 60 °C, oberhalb von 80 °C oder oberhalb von 90 °C.

In einer bevorzugten Ausführungsform wird das Polyamid der Komponente I unter Verwendung von 0,01 bis 0,6 mol-%, bezogen auf die Gesamtheit der eingesetzten Monomeren, eines mindestens trifunktionellen Molekulargewichtsreglers hergestellt, dessen funktionelle Gruppen Carboxylgruppen und/oder Aminogruppen beziehungsweise deren Derivate sind. Mit Derivaten sind solche gemeint, die entweder während der Polykondensation intermediär zu Carboxylgruppen oder Aminogruppen umgewandelt werden oder analog zu diesen reagieren, beispielsweise Estergruppen, Säurechloridgruppen, Amidgruppen oder Urethangruppen. Derartige Polyamidformmassen sind besonders hydrolysestabil. Polyamidmischungen dieser Art, die entweder als Formmasse vorliegen oder als deren Vorstufe, nämlich als Trockenmischung der Komponenten I und II, sind ebenfalls Gegenstand der Erfindung.

Gegenstand der Erfindung ist weiterhin ein Formteil, das einen Bereich aus der erfindungsgemäßen Polyamidmischung enthält, wobei die Polyamidmischung hier als Formmasse vorliegt. Diese Formteile sind vorzugsweise Hohlkörper oder Folien. Beispiele für Folien sind Backsheetfolien in Solarmodulen, die durch feuchtwarme Luft hydrolytisch geschädigt werden können. Unter Hohlkörper sind erfindungsgemäß sowohl Behälter zu verstehen als auch Hohlprofile, insbesondere Rohre.

Das Polyamid der Komponente I der Polyamidmischung beziehungsweise der Schicht aus einer Polyamidformmasse ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6, PA66 oder Copolyamide auf dieser Basis mit Einheiten, die sich von Terephthalsäure und/oder Isophthalsäure herleiten (im Allgemeinen als PPA bezeichnet) sowie PA9T und PA10T und deren Blends mit anderen Polyamiden. In einer bevorzugten Ausführungsform enthalten die Monomereinheiten des Polyamids im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212, PA1213 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können. Besonders bevorzugt wird PA11 oder PA12 eingesetzt.

Das Polyamid kann auch ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole mittels reduktiver Aminierung oder Kupplung an Acrylnitril mit nachfolgender Hydrierung zugänglich (z. B. EP-A-0 434 244; EP-A-0 296 852). Beim Polyetherdiamin kann die Polyethereinheit beispielsweise auf 1.2-Ethandiol, 1.2-Propandiol, 1.3-Propandiol, 1.4-Butandiol oder 1.3-Butandiol basieren. Die Polyethereinheit kann auch gemischt aufgebaut sein, etwa mit statistischer oder blockweiser Verteilung der von den Diolen herrührenden Einheiten. Das Gewichtsmittel der Molmasse der Polyetherdiamine liegt bei 200 bis 5000 g/mol und vorzugsweise bei 400 bis 3000 g/mol; ihr Anteil am Polyetheramid beträgt bevorzugt 4 bis 60 Gew.-% und besonders bevorzugt 10 bis 50 Gew.-%. Geeignete Polyetherdiamine sind z. B. in Form der JEFFAMIN® D- oder ED-Typen oder der ELASTAMINE®-Typen bei der Huntsman Corp. oder in Form der Polyetheramin D-Reihe bei der BASF SE kommerziell erhältlich. In geringen Mengen kann auch ein Polyethertriamin mitverwendet werden, z. B. ein JEFFAMIN®T-Typ, falls ein verzweigtes Polyetheramid eingesetzt werden soll. Vorzugsweise setzt man Polyetherdiamine ein, die pro Ethersauerstoff im Mittel mindestens 2,3 Kohlenstoffatome in der Kette enthalten.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombination PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer bevorzugten Ausführungsform wird eine Mischung aus 30 bis 99 Gew.-%, bevorzugt 40 bis 98 Gew.-% und besonders bevorzugt 50 bis 96 Gew.-% Polyamid im engeren Sinne sowie 1 bis 70 Gew.-%, bevorzugt 2 bis 60 Gew.-% und besonders bevorzugt 4 bis 50 Gew.-% Polyetheramid verwendet.

Bei der Herstellung dieses Polyamids kann die gewünschte Konzentration an Carboxylendgruppen gemäß dem Stand der Technik mit Hilfe eines Molekulargewichtsreglers eingestellt werden. Geeignete Molekulargewichtsregler sind beispielsweise Monoamine, Monocarbonsäuren, Diamine, Dicarbonsäuren, Triamine, Tricarbonsäuren, Tetraamine, Tetracarbonsäuren beziehungsweise Oligoamine oder Oligocarbonsäuren mit jeweils 5 bis ca. 8 Amino- oder Carboxylgruppen. Hierbei ist die Verwendung von Dicarbonsäuren, Tricarbonsäuren oder einer Mischung aus Dicarbonsäuren und Tricarbonsäuren bevorzugt. Als Dicarbonsäure kann beispielsweise Dodecandicarbonsäure und als Tricarbonsäure beispielsweise Trimellitsäure eingesetzt werden. Die Reglermenge wird so dosiert, dass die erfindungsgemäße Kombination von ηᵣₑₗ und Carboxylendgruppengehalt erhalten wird. Durch Einsatz einer Tricarbonsäure oder eines Triamins wird sowohl das Molekulargewicht als auch die Konzentration an Endgruppen erhöht, da diese als Verzweiger wirken. Gleiches gilt für Tetraamine, Tetracarbonsäuren, Oligoamine sowie Oligocarbonsäuren. Wird ein Triamin, ein Tetraamin oder ein Oligoamin als Verzweiger eingesetzt, so kann die gewünschte Konzentration an Carboxylendgruppen mit Hilfe gleichzeitiger Regelung mit einer Dicarbonsäure eingestellt werden.

Geeignete Einsatzmengen für Tricarbonsäure, Triamin, Tetraamin, Tetracarbonsäure, Oligoamin beziehungsweise Oligocarbonsäure sind 0,01 bis 0,6 mol-%, vorzugsweise 0,1 bis 0,5 mol-% und besonders bevorzugt 0,15 bis 0,4 mol-%, jeweils bezogen auf die Gesamtheit der eingesetzten Monomeren.

Ein bevorzugtes Polyamid der Komponente I hat eine relative Lösungsviskosität ηᵣₑₗ im Bereich von 2,0 bis 2,2 und einen Carboxylendgruppengehalt im Bereich von 30 bis 60 mäq/kg. Hier ist weiterhin bevorzugt, dass gleichzeitig die Konzentration der Carboxylendgruppen höher als die Konzentration der Aminoendgruppen ist. Überraschenderweise wird in diesem Fall eine erheblich verbesserte Hydrolysebeständigkeit der Formmasse oder der Formteile festgestellt. Angesichts des Standes der Technik, der die Erhöhung der Hydrolysebeständigkeit durch Erhöhung der Konzentration der Aminoendgruppen lehrt, war dies nicht zu erwarten.

Zur Bestimmung der Carboxylendgruppen wird 1 g Polyamid in 50 ml Benzylalkohol unter Stickstoffabdeckung bei 165 °C gelöst. Die Lösung wird mit einer Lösung von KOH in Ethylenglykol (0,05 mol KOH/I) gegen Phenolphthalein bis zum Farbumschlag titriert.

Die relative Lösungsviskosität ηᵣₑₗ des Polyamids der Komponente I muss ausreichend hoch sein. So wird gewährleistet, dass der Carboxylendgruppengehalt des Polyamids im anspruchsgemäßen Bereich liegt, ohne dass gleichzeitig der Aminoendgruppengehalt unangemessen hoch ist. Bekanntermaßen ist der gesamte Endgruppengehalt umso niedriger, je höher ηᵣₑₗ ist. Darüber hinaus ist es vorteilhaft, eine gewisse Molekulargewichtsreserve vorliegen zu haben, um ein gewisses Ausmaß an Hydrolyse tolerieren zu können.

Eine Obergrenze der relativen Lösungsviskosität ηᵣₑₗ wird in erster Linie dadurch festgelegt, dass das Polyamid noch verarbeitbar sein muss. Dies ist bei extrem hohem ηᵣₑₗ nicht mehr in vollem Umfang gewährleistet. In der Regel beträgt ηᵣₑₗ maximal 3,0, vorzugsweise maximal 2,8 und besonders bevorzugt maximal 2,6. Darüber hinaus ist die Obergrenze von ηᵣₑₗ dadurch festgelegt, dass das Polyamid mindestens 10 mäq/kg an Carboxylendgruppen besitzen muss.

Beim Polyamin-Polyamid-Pfropfcopolymer können als Polyamin beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE-OS 196 54 058);
- Dendrimere wie beispielsweise ((H₂N-(CH₂)₃)₂N-(CH₂)₃)₂-N(CH₂)₂-N((CH₂)₂-N((CH₂)₃-NH₂)₂)₂ (DE-A-196 54 179) oder Tris(2-aminoethyl)amin, N,N-Bis(2-aminoethyl)-N',N'-bis[2-[bis(2-aminoethyl)amino]ethyl]-1,2-ethandiamin, 3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

Die Herstellung dieser Pfropfcopolymere ist in der US 6 355 358 näher beschrieben.

Unter Aminogruppen des Polyamin-Polyamid-Pfropfcopolymers werden hier und im Folgenden nicht nur Aminoendgruppen, sondern auch gegebenenfalls vorhandene sekundäre bzw. tertiäre Aminfunktionen des Polyamins verstanden. Zur Bestimmung der Aminogruppen wird 1 g des Pfropfcopolymers in 50 ml m-Kresol bei 25 °C gelöst. Die Lösung wird mit Perchlorsäure potentiometrisch titriert. Auf diese Weise wird auch die Aminoendgruppenkonzentration des Polyamids der Komponente I bestimmt.

Der Carboxylendgruppengehalt des Polyamin-Polyamid-Pfropfcopolymers sollte möglichst niedrig sein. Er liegt vorzugsweise bei maximal 15 % des Aminogruppengehalts, besonders bevorzugt bei maximal 10 % des Aminogruppengehalts, insbesondere bevorzugt bei maximal 8 % des Aminogruppengehalts und ganz besonders bevorzugt bei maximal 5 % des Aminogruppengehalts. In einer weiteren bevorzugten Ausführungsform beträgt er maximal 10 mäq/kg und besonders bevorzugt maximal 6 mäq/kg.

Bei der Kombination der Komponenten I und II der Polyamidmischung ist darauf zu achten, dass beide Komponenten in der Schmelzemischung ausreichend miteinander verträglich sind. Die Verträglichkeit kann besonders einfach durch eine DSC-Messung gemäß DIN EN ISO 11357-3 beurteilt werden; sie äußert sich darin, dass in der Formmasse die Kristallitschmelzpunkte Tₘ der einzelnen Komponenten aufeinander zu verschoben sind oder ganz zusammenfallen. Vorzugsweise ist in der Formmasse der Abstand der Kristallitschmelzpunkte von I und II um mindestens 30 % und besonders bevorzugt um mindestens 50 % verringert, während sie ganz besonders bevorzugt zusammenfallen.

Die Verträglichkeit von I und II kann über die jeweilige Zusammensetzung gesteuert werden. Hier sind folgende Ausführungsformen besonders bevorzugt:
- Besitzen die Monomereinheiten des Polyamids der Komponente I im Mittel 6 bis 7,5 C-Atome, so besitzt der Polyamidanteil des Pfropfcopolymers der Komponente II im Mittel 6 bis 9 C-Atome, bevorzugt 6 bis 8 C-Atome und besonders bevorzugt 6 bis 7,5 C-Atome.
- Besitzen die Monomereinheiten des Polyamids der Komponente I im Mittel 7,5 bis 9 C-Atome, so besitzt der Polyamidanteil des Pfropfcopolymers der Komponente II im Mittel 6 bis 10,5 C-Atome, bevorzugt 7 bis 9,5 C-Atome und besonders bevorzugt 7,5 bis 9 C-Atome.
- Besitzen die Monomereinheiten des Polyamids der Komponente I im Mittel 9 bis 10,5 C-Atome, so besitzt der Polyamidanteil des Pfropfcopolymers der Komponente II im Mittel 7,5 bis 12 C-Atome, bevorzugt 8,5 bis 11 C-Atome und besonders bevorzugt 9 bis 10,5 C-Atome.
- Besitzen die Monomereinheiten des Polyamids der Komponente I im Mittel 10,5 bis 12 C-Atome, so besitzt der Polyamidanteil des Pfropfcopolymers der Komponente II im Mittel 9 bis 13,5 C-Atome, bevorzugt 10 bis 12,5 C-Atome und besonders bevorzugt 10,5 bis 12 C-Atome.

Hierbei wird dann, wenn die Komponente I aus mehreren verschiedenen Polyamiden besteht, die Anzahl der C-Atome dieser Polyamidmischung so gemittelt, als ob diese Polyamidmischung als Copolyamid vorliegen würde. Ist eines dieser Polyamide ein Polyetheramid, so wird hierbei nur dessen Polyamidanteil berücksichtigt, während die Polyetherblöcke unberücksichtigt bleiben.

Generell ist besonders bevorzugt, dass sich die Mittelwerte der C-Atome der Komponenten I und II maximal um 1 und insbesondere um maximal 0,5 unterscheiden; ganz besonders bevorzugt sind sie identisch. Insbesondere bevorzugt sind das Polyamid der Komponente I und der Polyamidanteil der Komponente II von der Monomerenzusammensetzung her identisch.

Der Polyamidanteil der Komponente II ist in allen diesen Fällen der Anteil, der aus der Komponente II b) resultiert.

Neben den Komponenten I und II kann die erfindungsgemäße Polyamidmischung weitere Bestandteile enthalten wie z. B. Schlagzähmodifikatoren, andere Thermoplaste, Weichmacher und andere übliche Zusatzstoffe.

Geeignete Schlagzähmodifikatoren sind beispielsweise Ethylen/α-Olefin-Copolymere, vorzugsweise ausgewählt aus
a) Ethylen/C₃- bis C₁₂-α-Olefin-Copolymeren mit 20 bis 96, bevorzugt 25 bis 85 Gew.-% Ethylen. Als C₃- bis C₁₂-α-Olefin wird beispielsweise Propen, 1-Buten, 1-Penten, 1-Hexen, 1-Octen, 1-Decen oder 1-Dodecen eingesetzt. Typische Beispiele hierfür sind Ethylen-Propylen-Kautschuk sowie LLDPE und VLDPE.
b) Ethylen/C₃- bis C₁₂-α-Olefin/unkonjugiertes Dien-Terpolymeren mit 20 bis 96, bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien oder 5-Ethylidennorbornen. Als C₃- bis C₁₂-α-Olefin sind ebenfalls beispielsweise Propen, 1-Buten, 1-Penten, 1-Hexen, 1-Octen, 1-Decen oder 1-Dodecen geeignet.

Die Herstellung dieser Copolymere bzw. Terpolymere, beispielsweise mit Hilfe eines Ziegler-Natta-Katalysators, ist Stand der Technik.

Andere geeignete Schlagzähmodifikatoren sind Styrol-Ethylen/Butylen-Blockcopolymere. Hierbei werden vorzugsweise Styrol-Ethylen/Butylen-Styrol-Blockcopolymere (SEBS) eingesetzt, die durch Hydrierung von Styrol-Butadien-Styrol-Blockcopolymeren erhältlich sind. Es können aber auch Diblocksysteme (SEB) oder Multiblocksysteme verwendet werden. Derartige Blockcopolymere sind Stand der Technik.

Diese Schlagzähmodifikatoren enthalten vorzugsweise Säureanhydridgruppen, die auf bekannte Weise durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Geeignete Reagenzien sind beispielsweise Maleinsäure, Maleinsäureanhydrid, Maleinsäuremonobutylester, Fumarsäure, Citraconsäureanhydrid, Aconitsäure oder Itaconsäureanhydrid. Auf diese Weise sind vorzugsweise 0,1 bis 4 Gew.-% eines ungesättigten Anhydrids an den Schlagzähmodifikator aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden.

Andere geeignete Schlagzähmodifikatoren sind Copolymere, die Einheiten der folgenden Monomere enthalten:
a) 20 bis 94,5 Gew.-% eines oder mehrerer α-Olefine mit 2 bis 12 C-Atomen,
b) 5 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C1- bis C12-Alkohol, die gegebenenfalls eine freie Hydroxyl- oder Epoxidfunktion tragen können,
   - Acrylnitril bzw. Methacrylnitril,
   - Acrylamiden bzw. Methacrylamiden,
c) 0,5 bis 50 Gew.-% eines olefinisch ungesättigten Epoxids, Carbonsäureanhydrids, Carbonsäureimids, Oxazolins oder Oxazinons.

Dieses Copolymere ist beispielsweise aus folgenden Monomeren zusammengesetzt, wobei diese Aufzählung nicht erschöpfend ist:
a) α-Olefine wie beispielsweise Ethylen, Propen, 1-Buten, 1-Penten, 1-Hexen, 1-Octen, 1-Decen oder 1-Dodecen;
b) Acrylsäure, Methacrylsäure oder deren Salze, beispielsweise mit Na^{⊕} oder Zn^{2⊕} als Gegenion; Methylacrylat, Ethylacrylat, n-Propylacrylat, n-Butylacrylat, Isobutylacrylat, n-Hexylacrylat, n-Octylacrylat, 2-Ethylhexylacrylat, Isononylacrylat, Dodecylacrylat, Methylmethacrylat, Ethylmethacrylat, n-Propylmethacrylat, n-Butylmethacrylat, Isobutylmethacrylat, 2-Ethylhexylmethacrylat, Hydroxyethylacrylat, 4-Hydroxybutylmethacrylat, Glycidylacrylat, Glycidylmethacrylat, Acrylnitril, Methacrylnitril, Acrylamid, N-Methylacrylamid, N,N-Dimethylacrylamid, N-Ethylacrylamid, N-Hydroxyethylacrylamid, N-Propylacrylamid, N-Butylacrylamid, N-(2-Ethylhexyl)acrylamid, Methacrylamid, N-Methylmethacrylamid, N,N-Dimethylmethacrylamid, N-Ethylmethacrylamid, N-Hydroxyethylmethacrylamid, N-Propylmethacrylamid, N-Butylmethacrylamid, N,N-Dibutylmethacrylamid, N-(2-Ethylhexyl)methacrylamid;
c) Vinyloxiran, Allyloxiran, Glycidylacrylat, Glycidylmethacrylat, Maleinsäureanhydrid, Aconitsäureanhydrid, Itaconsäureanhydrid, ferner die aus diesen Anhydriden durch Reaktion mit Wasser entstehenden Dicarbonsäuren; Maleinimid, N-Methylmaleinimid, N-Ethylmaleinimid, N-Butylmaleinimid, N-Phenylmaleinimid, Aconitsäureimid, N-Methylaconitsäureimid, N-Phenylaconitsäureimid, Itaconsäureimid, N-Methylitaconsäureimid, N-Phenylitaconsäureimid, N-Acryloylcaprolactam, N-Methacryloylcaprolactam, N-Acryloyllaurinlactam, N-Methacryloyllaurinlactam, Vinyloxazolin, Isopropenyloxazolin, Allyloxazolin, Vinyloxazinon oder Isopropenyloxazinon.

Bei einer Verwendung von Glycidylacrylat oder Glycidylmethacrylat fungieren diese gleichzeitig auch als acrylische Verbindung b), so dass bei ausreichender Menge des Glycidyl(meth)acrylats keine weitere acrylische Verbindung enthalten zu sein braucht. In dieser speziellen Ausführungsform enthält das Copolymere Einheiten der folgenden Monomere:
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C₁- bis C₁₂-Alkohol,
   - Acrylnitril bzw. Methacrylnitril,
   - Acrylamiden bzw. Methacrylamiden
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

Das Copolymere kann in kleiner Menge weitere einpolymerisierte Monomere enthalten, sofern diese die Eigenschaften nicht nennenswert beeinträchtigen, wie beispielsweise Maleinsäuredimethylester, Fumarsäuredibutylester, Itaconsäurediethylester oder Styrol.

Die Herstellung derartiger Copolymerer ist Stand der Technik. Eine Vielzahl verschiedener Typen hiervon ist als Handelsprodukt erhältlich, beispielsweise unter der Bezeichnung LOTADER® (Arkema; Ethylen/Acrylat/Terkomponente bzw. Ethylen/Glycidylmethacrylat).

In einer bevorzugten Ausführungsform enthält die erfindungsgemäße Polyamidmischung hierbei folgende Komponenten:
1. 60 bis 96,5 Gew.-Teile Polyamidanteil als Summe der Komponenten I und II,
2. 3 bis 39,5 Gew.-Teile einer Schlagzähkomponente, die Säureanhydridgruppen enthält, wobei die Schlagzähkomponente ausgewählt ist aus Ethylen/α-Olefin-Copolymeren und Styrol-Ethylen/Butylen-Blockcopolymeren,
3. 0,5 bis 20 Gew.-Teile eines Copolymeren, das Einheiten der folgenden Monomere enthält:
   a) 20 bis 94,5 Gew.-% eines oder mehrerer α-Olefine mit 2 bis 12 C-Atomen,
   b) 5 bis 79,5 Gew.-% einer oder mehrerer acrylischer Verbindungen, ausgewählt aus
      - Acrylsäure bzw. Methacrylsäure bzw. deren Salzen,
      - Estern von Acrylsäure bzw. Methacrylsäure mit einem C₁- bis C₁₂-Alkohol, die gegebenenfalls eine freie Hydroxyl- oder Epoxidfunktion tragen können,
      - Acrylnitril bzw. Methacrylnitril,
      - Acrylamiden bzw. Methacrylamiden,
   c) 0,5 bis 50 Gew.-% eines olefinisch ungesättigten Epoxids, Carbonsäureanhydrids, Carbonsäureimids, Oxazolins oder Oxazinons,
   wobei die Summe der Gewichtsteile der Komponenten gemäß 1., 2. und 3. 100 beträgt.

In einer weiteren bevorzugten Ausführungsform enthält die Polyamidmischung hierbei:
1. 65 bis 90 Gew.-Teile und besonders bevorzugt 70 bis 85 Gew.-Teile Polyamidanteil als Summe der Komponenten I und II,
2. 5 bis 30 Gew.-Teile, besonders bevorzugt 6 bis 25 Gew.-Teile und insbesondere bevorzugt 7 bis 20 Gew.-Teile der Schlagzähkomponente,
3. 0,6 bis 15 Gew.-Teile und besonders bevorzugt 0,7 bis 10 Gew.-Teile des Copolymeren, welches bevorzugt Einheiten der folgenden Monomere enthält:
   a) 30 bis 80 Gew.-% α-Olefin(e),
   b) 7 bis 70 Gew.-% und besonders bevorzugt 10 bis 60 Gew.-% der acrylischen Verbindung(en),
   c) 1 bis 40 Gew.-% und besonders bevorzugt 5 bis 30 Gew.-% des olefinisch ungesättigten Epoxids, Carbonsäureanhydrids, Carbonsäureimids, Oxazolins oder Oxazinons.

Als Schlagzähkomponente kann darüber hinaus auch Nitrilkautschuk (NBR) oder hydrierter Nitrilkautschuk (H-NBR), die gegebenenfalls funktionelle Gruppen enthalten, verwendet werden. Entsprechende Formmassen sind in der US 2003/0220449A1 beschrieben.

Andere Thermoplaste, die in der Polyamidmischung enthalten sein können, sind in erster Linie Polyolefine. Sie können in einer Ausführungsform, wie weiter oben bei den Schlagzähmodifikatoren beschrieben, Säureanhydridgruppen enthalten und dann gegebenenfalls zusammen mit einem unfunktionalisierten Schlagzähmodifikator vorliegen. In einer weiteren Ausführungsform sind sie nicht funktionalisiert und liegen in der Polyamidmischung in Kombination mit einem funktionalisierten Schlagzähmodifikator oder einem funktionalisierten Polyolefin vor. Der Begriff "funktionalisiert" bedeutet, dass die Polymere gemäß dem Stand der Technik mit Gruppen versehen sind, die mit den Polyamid-Endgruppen reagieren können, z. B. Säureanhydridgruppen, Carboxylgruppen, Epoxidgruppen oder Oxazolingruppen. Hierbei sind folgende Zusammensetzungen bevorzugt:
1. 50 bis 95 Gew.-Teile Polyamidanteil als Summe der Komponenten I und II,
2. 1 bis 49 Gew.-Teile funktionalisiertes oder unfunktionalisiertes Polyolefin sowie
3. 1 bis 49 Gew.-Teile funktionalisierter oder unfunktionalisierter Schlagzähmodifikator,
wobei die Summe der Gewichtsteile der Komponenten gemäß 1., 2. und 3. 100 beträgt.

Beim Polyolefin handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-VinylacetatCopolymere, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch.

In einer möglichen Ausführungsform enthält die Polyamidmischung 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure. Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Darüber hinaus kann die Polyamidmischung noch übliche Mengen von Zusatzstoffen enthalten, die zum Einstellen bestimmter Eigenschaften benötigt werden. Beispiele hierfür sind Pigmente bzw. Füllstoffe wie Ruß, Titandioxid, Zinksulfid, Verstärkungsfasern wie z.B. Glasfasern, Verarbeitungshilfsmittel wie Wachse, Zinkstearat oder Calciumstearat, Antioxidantien, UV-Stabilisatoren sowie Zusätze, die dem Produkt antielektrostatische Eigenschaften verleihen wie z. B. Kohlenstofffasern, Graphitfibrillen, Fasern aus rostfreiem Stahl bzw. Leitfähigkeitsruß.

Die erfindungsgemäße Polyamidmischung kann als Trockenmischung vorliegen, beispielsweise als Granulatmischung oder als Pulvermischung. In einer Ausführungsform hiervon ist sie die Mischung von Granulaten, die auf der Komponente I beziehungsweise der Komponente II basieren; diese Granulate können darüber hinaus die übrigen Bestandteile enthalten. Die Polyamidmischung kann aber auch als Formmasse vorliegen, wobei die einzelnen Bestandteile zusammen in der Schmelze gemischt, als Strang extrudiert und granuliert wurden.

Zur Herstellung von Formteilen kann auch eine Trockenmischung eingesetzt werden, wobei die Verarbeitung unter scherenden Bedingungen erfolgen muss.

Bei Mitverwendung einer Verbindung mit mindestens zwei Carbonateinheiten wird ein besonders effizienter Molekulargewichtsaufbau des Polyamids erzielt. So enthält die Polyamidmischung bei der Herstellung großdimensionierter Formteile vorzugsweise eine Verbindung mit mindestens zwei Carbonateinheiten in einem Mengenverhältnis von 0,005 bis 10 Gew.-%, berechnet im Verhältnis zum eingesetzten Polyamidanteil. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure insbesondere mit Phenolen oder Alkoholen. Eine derartige Polyamidmischung ist ebenfalls eine bevorzugte Ausführungsform der Erfindung.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo-oder Polyamid-, -ester-, -ether-, -etheresteramid- oder -etheramideinheiten. Solche Verbindungen können durch bekannte Oligo- oder Polymerisationsverfahren bzw. durch polymeranaloge Umsetzungen hergestellt werden.

In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Die Eindosierung der als Additiv verwendeten Verbindung mit mindestens zwei Carbonateinheiten in Form eines Masterbatches ermöglicht eine genauere Dosierung des Additivs, da größere Mengen verwendet werden. Es stellte sich zudem heraus, dass durch die Verwendung eines Masterbatches eine verbesserte Extrudatqualität erzielt wird. Das Masterbatch umfasst als Matrixmaterial vorzugsweise ein Polyamid im engeren Sinne oder ein Polyetheramid.

Die Konzentration der Verbindung mit mindestens zwei Carbonateinheiten im Masterbatch beträgt vorzugsweise 0,15 bis 50 Gew.-%, besonders bevorzugt 0,2 bis 25 Gew.-% und insbesondere bevorzugt 0,3 bis 15 Gew.-%. Die Herstellung eines solchen Masterbatches erfolgt in der üblichen, dem Fachmann bekannten Weise.

Geeignete Verbindungen mit mindestens zwei Carbonateinheiten sowie geeignete Masterbatches sind in der US 7 005 481, auf die hier ausdrücklich Bezug genommen wird, ausführlich beschrieben.

Ein auf diesem Prinzip beruhendes Additiv zur Molekulargewichtseinstellung bei Polyamiden wird von der Fa. Brüggemann KG unter der Bezeichnung Brüggolen M1251 vertrieben. Primäre Anwendungen liegen im Bereich der Viskositätseinstellung für Recyclat aus PA6 oder PA66, das in Extrusionsformmassen wiederverwertet wird. Bei dem Additiv Brüggolen M1251 handelt es sich um ein Masterbatch eines niedrigviskosen Polycarbonats, beispielsweise Lexan 141, in einem säureterminierten PA6. Für den Molekulargewichtsaufbau ist eine Reaktion der im aufzukondensierenden Material enthaltenen Aminoendgruppen mit dem Polycarbonat ursächlich.

Die Wirksamkeit der Methode wird in der US 7 005 481 am Beispiel der Aufkondensierung von PA6 und PA66 gezeigt, wobei die entsprechenden Polykondensate teilweise in reiner Form eingesetzt werden, teilweise aber auch Zuschlagstoffe enthalten.

Die Erfindung ist anwendbar bei Polyamiden, die herstellungsbedingt mindestens 5 ppm Phosphor in Form einer sauren Verbindung enthalten. In diesem Fall wird der Polyamidformmasse vor der Compoundierung oder bei der Compoundierung 0,001 bis 10 Gew.-%, bezogen auf das Polyamid, eines Salzes einer schwachen Säure zugegeben. Geeignete Salze sind in der US 2005/038201 A1 offenbart, auf die hiermit ausdrücklich Bezug genommen wird.

Die Erfindung ist jedoch genauso gut anwendbar bei Polyamiden, die herstellungsbedingt weniger als 5 ppm Phosphor oder gar keinen Phosphor in Form einer sauren Verbindung enthalten. In diesem Fall kann zwar, muss aber nicht ein entsprechendes Salz einer schwachen Säure zugegeben werden.

Die Verbindung mit mindestens zwei Carbonateinheiten wird als solche oder als Masterbatch vorzugsweise erst nach der Compoundierung, aber spätestens während der Verarbeitung zugegeben. Bevorzugt mischt man bei der Verarbeitung die aufzukondensierende Polyamidmischung als Granulat mit dem Granulat der Verbindung mit mindestens zwei Carbonateinheiten oder dem entsprechenden Masterbatch. Es kann aber auch eine Granulatmischung der fertig compoundierten Polyamidformmasse mit der Verbindung mit mindestens zwei Carbonateinheiten bzw. dem Masterbatch hergestellt, anschließend transportiert oder gelagert und danach verarbeitet werden. Entsprechend kann natürlich auch mit Pulvermischungen verfahren werden. Gemäß dieser bevorzugten Ausführungsform ist entscheidend, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden.

Das Verfahren zur Herstellung derartiger Formteile ist in allgemeiner Form in der US 2006/182916 und der US 2006/183869 beschrieben.

Da die Carbonateinheiten mit den Aminoendgruppen des Polyamids reagieren und auf diese Weise als Kettenverlängerer wirken, ist es in diesem Fall vorteilhaft, wenn das Polyamid der Komponente I bei dieser Ausführungsform einen Überschuss an Aminoendgruppen besitzt. In diesem Fall enthält das Polyamid der Komponente I vorzugsweise 10 bis 40 mäq/kg, besonders bevorzugt 14 bis 35 mäq/kg und insbesondere bevorzugt 28 bis 32 mäq/kg Carboxylendgruppen.

Die durch Umsetzung der Polyamidmischung mit der Verbindung mit mindestens zwei Carbonateinheiten erhaltene Schmelzemischung wird ausgetragen und verfestigt. Dies kann beispielsweise auf folgende Weisen geschehen:
-- Die Schmelze wird als Profil extrudiert, beispielsweise als Rohr.
   - Die Schmelze wird zu einem Schlauch ausgeformt, welcher zur Beschichtung auf ein Rohr aufgebracht wird.
   - Die Schmelze wird als Folie oder Platte extrudiert; diese können anschließend gegebenenfalls monoaxial oder biaxial gestreckt und/oder um ein Formstück gewickelt werden. Die Folie oder Platte kann auch vor der Weiterverarbeitung tiefgezogen werden.
   - Die Schmelze wird zu Vorformlingen extrudiert, die anschließend in einem Blasformverfahren verformt werden.
   - Die Schmelze wird in einem Spritzgießprozess zu einem Formteil verarbeitet.

Die erfindungsgemäß hergestellten Formteile sind in einer Ausführungsform Hohlkörper, insbesondere mit großen Durchmessern, beispielsweise Liner, Gasleitungsrohre, Schichten von Offshore-Leitungen, Subsea-Leitungen oder Versorgungsleitungen, Raffinerieleitungen, Hydraulikleitungen, Chemikalienleitungen, Kabelkanäle, Tankstellenversorgungsleitungen, Belüftungsleitungen, Luftansaugrohre, Tankeinfüllstutzen, Kühlmittelleitungen, Vorratsbehälter und Kraftstofftanks. Derartige Formteile sind herstellbar beispielsweise durch Extrusion, Coextrusion oder Blasformen einschließlich Saugblasformen, 3-D-Blasformen, Schlaucheinlege- und Schlauchmanipulationsverfahren. Diese Verfahren sind Stand der Technik.

Die Wandung der Formteile und insbesondere der Hohlkörper oder Hohlprofile kann hierbei entweder einschichtig sein und in diesem Fall vollständig aus der erfindungsgemäßen Formmasse bestehen, sie kann aber auch mehrschichtig sein, wobei die erfindungsgemäße Formmasse die Außenschicht, die Innenschicht und/oder die Mittelschicht bilden kann. Die Wandung kann aus einer Vielzahl von Schichten bestehen; die Anzahl der Schichten richtet sich nach dem Anwendungszweck. Die andere Schicht bzw. die anderen Schichten bestehen aus Formmassen auf Basis anderer Polymerer, beispielsweise von Polyethylen, Polypropylen, Fluorpolymeren, oder aus Metall, beispielsweise Stahl. Beispielsweise sind die für Offshore-Leitungen verwendeten flexiblen Leitungen mehrschichtig aufgebaut; sie bestehen in der Regel aus einer Stahlstruktur, die mindestens eine Polymerschicht und in der Regel mindestens zwei Polymerschichten enthält. Derartige "Unbonded Flexible Pipes" sind beispielsweise in der WO 01/61232, der US 6 123 114 und der US 6 085 799 beschrieben; sie sind darüber hinaus in API Recommended Practice 17B, "Recommended Practice for Flexible Pipe", 5. Auflage, Mai 2014 sowie in API Specification 17J, "Specification for Unbonded Flexible Pipe", 4. Auflage, Mai 2014 näher charakterisiert. Der Ausdruck "unbonded" bedeutet in diesem Zusammenhang, dass mindestens zwei der Schichten, einschließlich Armierungsschichten und Kunststoffschichten, nicht konstruktiv miteinander verbunden sind. In der Praxis enthält das Rohr mindestens zwei Armierungsschichten, die über die Rohrlänge hinweg weder direkt noch indirekt, d. h. über weitere Schichten, miteinander verbunden sind. Dadurch wird das Rohr biegsam und ausreichend flexibel, um es für Transportzwecke aufzurollen. Die Polymerschichten übernehmen dabei zum einen die Funktion des Abdichtens des Rohres, so dass das transportierte Fluid nicht austreten kann, zum anderen, wenn die Schicht außen liegt, die Funktion des Schutzes der Stahlschichten gegen das umliegende Meerwasser. Die gegen das transportierte Fluid abdichtende Polymerschicht ist in einer Ausführungsform auf einer innen liegenden Karkasse extrudiert. Diese Polymerschicht, häufig auch Barriereschicht genannt, kann, wie oben beschrieben, wiederum aus mehreren Polymerschichten bestehen.

Bei einer weiteren Ausführungsform enthält ein starres Metallrohr einen Inliner, der ein erfindungsgemäßes rohrförmiges Formteil ist. Das Einbringen eines solchen Inliners in ein Metallrohr ist beispielsweise in der US2010/0300573 sowie in der dort aufgeführten Literatur näher beschrieben.

Durch den Einsatz von Polyetheramid im Masterbatch oder in der eingesetzten Polyamidmischung kann vorteilhafterweise die Flexibilität der Formmasse so erhöht werden, dass bei derartigen Barriereschichten oder Inlinern gegebenenfalls eine weitere Weichmachung durch externe Weichmacher entfallen kann. Dies hat den Vorteil, dass auch bei Kontakt mit stark extrahierenden Medien, wie z. B. überkritischem Kohlendioxid, die Materialeigenschaften konstant bleiben.

Darüber hinaus kann ein starres Metallrohr mit der erfindungsgemäßen Formmasse beschichtet werden, beispielsweise durch Extrusionsbeschichtung. Herstellung und Verwendung derartiger beschichteter Rohre sind aus der US 2010/0300572, der US 2012/0000541 und der US 2010/0257932 bekannt.

Die Erfindung wird im Folgenden anhand von Beispielen näher erläutert.

### Herstellungsbeispiel 1: Polyamin-Polyamid-Pfropfcopolymer (nachfolgend als "Pfropfcopolymer" bezeichnet)

95,5 kg Laurinlactam wurden in einem Aufheizkessel bei 180 °C bis 210 °C aufgeschmolzen und in einen druckfesten Polykondensationskessel überführt; anschließend wurden 5,0 kg Wasser und 0,0113 kg einer 50-prozentigen wässrigen Lösung von hypophosphoriger Säure zugegeben. Die Lactamspaltung wurde bei 280 °C unter dem sich einstellenden Eigendruck durchgeführt; danach wurde innerhalb von 3 Stunden auf einen Restwasserdampfdruck von 5 bar entspannt und 9,0 kg einer 50-prozentigen wässrigen Lösung eines Polyethylenimins (LUPASOL® G 100 der BASF SE) sowie 0,18 kg Dodecandisäure zudosiert. Beide Komponenten wurden unter dem sich einstellenden Eigendruck eingearbeitet; anschließend wurde auf Atmosphärendruck entspannt und dann 2 Stunden bei 280 °C Stickstoff über die Schmelze geleitet. Die klare Schmelze wurde über eine Schmelzepumpe als Strang ausgetragen, im Wasserbad abgekühlt und anschließend granuliert. ηᵣₑₗ: 1,41

| | |
|---|---|
| Aminogruppenkonzentration: | 792 mäq/kg |
| Carboxylendgruppenkonzentration: | 0 mäq/kg |

### Herstellungsbeispiel 2: Polyamidformmasse mit verzweigtem PA12

Nach einem Verfahren des Standes der Technik wurde ein mit Tricarbonsäure und Dicarbonsäure geregeltes PA12 aus 1000,0 kg Laurinlactam (99,79 mol-%), 43,0 kg Wasser, 0,114 kg einer 50-prozentigen wässrigen Lösung von hypophosphoriger Säure, 1,231 kg Dodecandisäure (0,11 mol-%) und 1,066 kg Trimesinsäure (0,10 mol-%) hergestellt. Die Analyse ergab:
ηᵣₑₗ: 2,1

| | |
|---|---|
| Aminogruppenkonzentration: | 14 mäq/kg |
| Carboxylendgruppenkonzentration: | 39 mäq/kg |

Das erhaltene Polyamid wurde auf bekannte Weise in der Schmelze mit 145,0 kg BBSA (Benzolsulfonsäure-n-butylamid; Weichmacher), 12,0 kg Stabilisatoren und 0,230 kg Verarbeitungshilfsmittel gemischt, um eine Formmasse zu erhalten, wie sie typischerweise für die Herstellung von Inlinern für metallische Rohre eingesetzt werden würde. Die Schmelze wurde als Strang ausgetragen und granuliert.

### Herstellungsbeispiel 3: Erfindungsgemäße Polyamidmischung

90 kg Granulat aus dem Herstellungsbeispiel 2 wurde mit 10 kg Pfropfcopolymer-Granulat aus dem Herstellungsbeispiel 1 mechanisch gemischt; die erhaltene Trockenmischung bzw. Granulatmischung wurde bei der anschließenden Weiterverarbeitung direkt eingesetzt.

### Herstellungsbeispiel 4: Reaktive Granulatmischung

Folgende Komponenten wurden als Granulat miteinander mechanisch gemischt:
75 kg Komponente A, herstellt durch Schmelzemischen von 83,223 Gew.-% eines unverzweigten, diamingeregelten PA12 mit ηᵣₑₗ von 2,15, Aminogruppenkonzentration 40 mäq/kg sowie Carboxylendgruppenkonzentration 10 mäq/kg, 4,744 Gew.-% Exxelor® VA 1803 (carbonsäureanhydridgruppenhaltiger Ethylen-Propylen-Kautschuk als Schlagzähmodifier), 10,403 Gew.-% BBSA, 1,524 Gew.-% Stabilisatoren und 0,124 Gew.-% Calciumstearat.

25 kg Komponente B, hergestellt durch Schmelzemischen von 82,196 Gew.-% eines unverzweigten, dicarbonsäuregeregelten PA12 mit nᵣₑₗ von 2,15, Aminoendgruppenkonzentration 10 mäq/kg und Carboxylendgruppenkonzentration 40 mäq/kg, 4,685 Gew.-% Exxelor® VA 1803, 1,726 Gew.-% Brüggolen® M1251 (Blockcopolymer auf Basis von Polycarbonat und PA6), 10,275 Gew.-% BBSA, 0,994 Gew.-% Stabilisatoren und 0,123 Gew.-% Calciumstearat.

Die erhaltene Granulatmischung wurde bei der anschließenden Weiterverarbeitung direkt eingesetzt; hierbei erhöhten sich durch die Reaktion mit dem Brüggolen® M1251 die Schmelzeviskosität sowie die Lösungsviskosität deutlich.

### Herstellungsbeispiel 5: Reaktive Granulatmischung mit Pfropfcopolymer

Folgende Komponenten wurden als Granulat miteinander mechanisch gemischt:
70 kg Komponente A wie beim Herstellungsbeispiel 4, mit dem alleinigen Unterschied, dass von den 83,223 Gew.-% des diamingeregelten PA12 13,300 Gew.-% durch das Pfropfcopolymer aus dem Herstellungsbeispiel 1 ersetzt wurde.

30 kg Komponente B wie beim Herstellungsbeispiel 4.

Die erhaltene Granulatmischung wurde bei der anschließenden Weiterverarbeitung direkt eingesetzt; hierbei erhöhten sich durch die Reaktion mit dem Brüggolen® M1251 die Schmelzeviskosität sowie die Lösungsviskosität deutlich.

### Herstellung der Prüfkörper:

Die Produkte aus den Herstellungsbeispielen 2 bis 5 wurden jeweils zu Rohren mit einem Außendurchmesser von 12 mm und einer Wandstärke von 1 mm extrudiert. Die extrudierten Rohre wurden in Glasflaschen mit Schraubdeckeln bei 120 °C in VE-Wasser gelagert. Hierfür wurde ein Laboklav-Dampfsterilisator mit diskreten Probenflaschen verwendet.

An den Proben wurden folgende Untersuchungen durchgeführt:
- Die korrigierte inhärente Viskosität CIV wurde an extrahierten Probekörpern gemäß API Technical Report 17 TR2, First Edition, June 2003, Appendix D bestimmt. Die dort für PA11 beschriebene Vorgehensweise kann für alle Polyamide verallgemeinert werden. Sie entspricht ISO 307:1994, jedoch mit 20 °C im Bad statt 25 °C.
- Zur Messung der Reißdehnung gemäß ASTM D638 wurde aus den Rohren der Probekörper Typ V geschnitten.

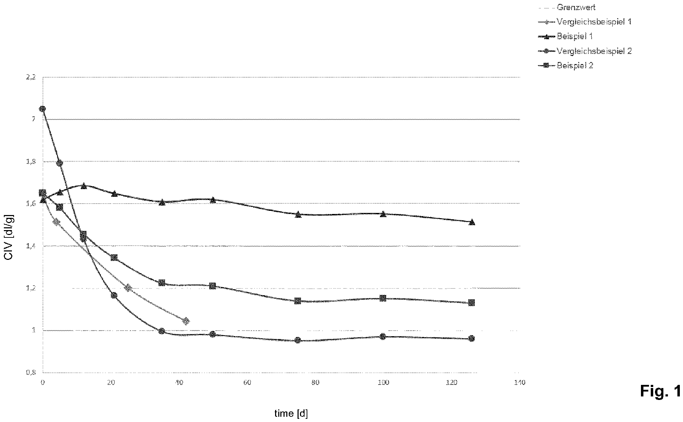

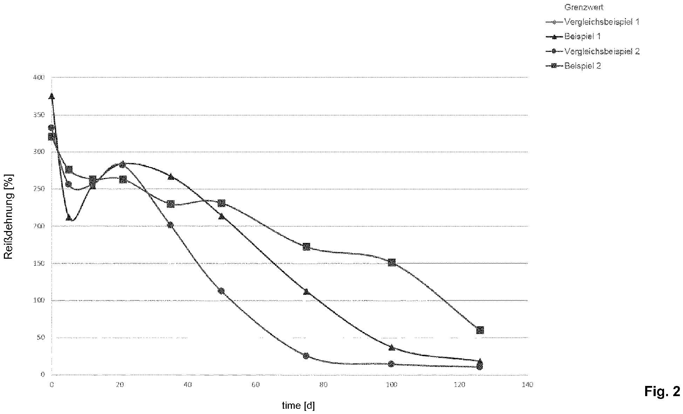

Die Ergebnisse sind in der Tabelle 1 und den Figuren 1 und 2 dargestellt. Beim Vergleichsbeispiel 1 wurde wegen der geringen Hydrolysestabilität auf die Messung der Reißdehnung verzichtet.

**Tabelle 1: Ergebnisse der Hydrolyseversuche (B = erfindungsgemäßes Beispiel; VB = Vergleichsbeispiel)**

| Beispiel | Prüfung | 0d | 4d | 5d | 12d | 21d | 25d | 35d | 42d | 50d | 75d | 100d | 126d |
|---|---|---|---|---|---|---|---|---|---|---|---|---|---|
| VB 1 | CIV [dl/g] | 1,651 | 1,514 | - | - | - | 1,201 | - | 1,044 | - | - | - | - |
| aus Herstellungsbeispiel 2 | | | | | | | | | | | | | |
| B1 | CIV [dl/g] | 1,619 | - | 1,656 | 1,686 | 1,648 | - | 1,609 | - | 1,619 | 1,550 | 1,552 | 1,514 |
| aus Herstellungsbeispiel 3 | Reißdehnung [%] | 375 | - | 212 | 254 | 284 | - | 267 | - | 214 | 112 | 37 | 18 |
| VB 1 | CIV [dl/g] | 2,048 | | 1,791 | 1,431 | 1,163 | | 0,995 | | 0,979 | 0,951 | 0,969 | 0,959 |
| aus Herstellungsbeispiel 4 | Reißdehnung [%] | 332 | | 256 | 256 | 282 | | 201 | | 112 | 25 | 14 | 10 |
| B 2 | CIV [dl/g] | 1,649 | | 1,580 | 1,455 | 1,342 | | 1,223 | | 1,209 | 1,138 | 1,150 | 1,129 |
| aus Herstellungsbeispiel 5 | Reißdehnung [%] | 320 | | 276 | 263 | 263 | | 230 | | 231 | 172 | 151 | 60 |

An der Figur 1 erkennt man, dass die beste Hydrolysestabilisierung erhalten wird, wenn das Polyamid der Komponente I verzweigt ist und einen Überschuss an Carboxylgruppen enthält. Setzt man gemäß dem Beispiel 2 ein unverzweigtes Polyamid mit Aminogruppenüberschuss als Komponente I ein (hier eine Mischung aus einem diamingeregelten und einem dicarbonsäuregeregelten Polyamid mit einem in der Summe resultierenden Aminogruppenüberschuss), so wird der durch die Anwendung (Inliner für ein Metallrohr bei der Rohölförderung) vorgegebene Grenzwert von 1,2 dl/g beim CIV-Wert zwar bei der Wasserlagerung vergleichsweise früh erreicht, jedoch wird im Vergleich zum Stand der Technik, wie er durch das Vergleichsbeispiel 2 illustriert wird, immer noch mehr als eine Verdoppelung der Standzeit erreicht. Die Reißdehnung (siehe Figur 2) als weiteres anwendungsbezogenes Kriterium erreicht hier andererseits den durch die Anwendung vorgegebenen Grenzwert von 50 % erst sehr spät. Dies bedeutet, dass die Formmasse trotz fortgeschrittener Hydrolyse immer noch ausreichend mechanische Reserven enthält.

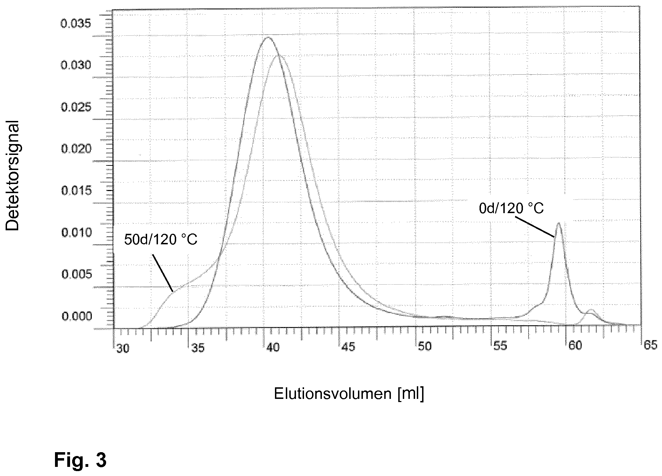

Die gefundene Hydrolysestabilisierung wird nur am Rande durch die mit dem Pfropfcopolymer eingebrachten Aminogruppen erzielt. Während der Wasserlagerung findet vielmehr eine Reaktion zwischen der Komponente I und der Komponente II statt. In der Figur 3 wird die Molmassenverteilung, bestimmt durch Gelpermeationschromatographie (GPC) in Hexafluorisopropanol, der Nullprobe des Beispiels 1 sowie einer 50 Tage bei 120 °C wassergelagerten Probe des Beispiels 1 gezeigt. Bei der Nullprobe (rote Kurve) erkennt man das Pfropfcopolymer deutlich als niedermolekulare Komponente bei hohem Elutionsvolumen. Nach 50 Tagen Wasserlagerung ist diese Komponente im Wesentlichen verschwunden; dafür hat sich im hochmolekularen Bereich eine Schulter ausgebildet. Dies erklärt den Befund, dass der CIV-Wert nach 50 Tagen auf unverändertem Niveau liegt. Der Wirkungsmechanismus bei der Hydrolysestabilisierung ist also komplex und beinhaltet eine Reaktion zwischen den Komponenten I und II. Diese Reaktion äußert sich auch im gefundenen Anstieg der Lösungsviskosität in den ersten Tagen der Wasserlagerung.

## Patentansprüche

1. Metallisches Rohr, das eine Schicht aus einer Polyamidformmasse enthält, die zu mindestens 50 Gew.-% einen Polyamidanteil enthält, der aus folgenden Komponenten besteht:
I) 60 bis 98 Gew.-Teile eines Polyamids, das 10 bis 70 mäq/kg Carboxylendgruppen enthält und eine relative Lösungsviskosität ηᵣₑₗ, bestimmt gemäß ISO 307 unter Verwendung einer 0,5 gew.-%igen Lösung in m-Kresol bei 25 °C, von mindestens 1,90 besitzt sowie
II) 2 bis 40 Gew.-Teile eines Polyamin-Polyamid-Pfropfcopolymers, das aus folgenden Monomeren hergestellt wird:
a) 0,5 bis 25 Gew.-%, bezogen auf die gesamte Monomerenmischung, eines Polyamins mit mindestens 4 Stickstoffatomen sowie
b) 75 bis 99,5 Gew.-%, bezogen auf die gesamte Monomerenmischung, polyamidbildenden Monomeren, ausgewählt aus Lactamen, ω-Aminocarbonsäuren und/oder äquimolaren Kombinationen von Diamin und Dicarbonsäure,
mit der Maßgabe, dass die Aminogruppenkonzentration des Pfropfcopolymers im Bereich von 100 bis 2500 mäq/kg liegt,
wobei die Summe der Gew.-Teile von I) und II) 100 beträgt,
wobei in der Formmasse die Kristallitschmelzpunkte Tₘ der einzelnen Komponenten aufeinander zu verschoben sind oder ganz zusammenfallen.

2. Metallisches Rohr gemäß Anspruch 1,
**dadurch gekennzeichnet,**
**dass** es ein flexibles oder ein starres Rohr ist, das die Schicht aus der Polyamidformmasse als Inliner oder als Schicht eines mehrschichtigen Inliners enthält.

3. Metallisches Rohr gemäß Anspruch 1,
**dadurch gekennzeichnet,**
**dass** es ein starres Rohr ist, das die Schicht aus der Polyamidformmasse als Außenbeschichtung enthält.

4. Metallisches Rohr gemäß einem der vorhergehenden Ansprüche,
**dadurch gekennzeichnet,**
**dass** das Polyamid der Komponente I unter Verwendung von 0,01 bis 0,6 mol-%, bezogen auf die Gesamtheit der eingesetzten Monomeren, eines mindestens trifunktionellen Molekulargewichtsreglers hergestellt wurde, dessen funktionelle Gruppen Carboxylgruppen und/oder Aminogruppen beziehungsweise deren Derivate sind.

5. Metallisches Rohr gemäß Anspruch 4,
**dadurch gekennzeichnet,**
**dass** das Polyamid der Komponente I mit Tricarbonsäure und gegebenenfalls zusätzlich Dicarbonsäure als Molekulargewichtsregler hergestellt wird.

6. Metallisches Rohr gemäß Anspruch 4,
**dadurch gekennzeichnet,**
**dass** das Polyamid der Komponente I mit einer Mischung aus Triamin und Dicarbonsäure als Molekulargewichtsregler hergestellt wird.

7. Metallisches Rohr gemäß einem der Ansprüche 4 bis 6,
**dadurch gekennzeichnet,**
**dass** beim Polyamid der Komponente I die Konzentration der Carboxylendgruppen höher ist als die Konzentration der Aminoendgruppen.

8. Metallisches Rohr gemäß einem der Ansprüche 4 bis 6,
**dadurch gekennzeichnet,**
**dass** die Polyamidformmasse 0,005 bis 10 Gew.-% einer Verbindung mit mindestens zwei Carbonateinheiten enthält, berechnet im Verhältnis zum eingesetzten Polyamidanteil.

9. Verwendung des metallischen Rohrs gemäß einem der Ansprüche 1, 2 sowie 5 bis 8
zur Beförderung eines hydrolysierend wirkenden Mediums.

## Claims

1. Metallic pipe comprising a layer of a polyamide moulding composition comprising at least 50% by weight of polyamide content composed of the following components:
I) from 60 to 98 parts by weight of a polyamide which comprises from 10 to 70 meq/kg of terminal carboxy groups and has a relative solution viscosity ηᵣₑₗ of at least 1.90, determined in accordance with ISO 307 using a 0.5% by weight solution in m-cresol at 25 °C, and
II) from 2 to 40 parts by weight of a polyamine-polyamide graft copolymer which is produced from the following monomers:
a) from 0.5 to 25% by weight, based on the entire monomer mixture, of a polyamine having at least 4 nitrogen atoms, and
b) from 75 to 99.5% by weight, based on the entire monomer mixture, of polyamide-forming monomers selected from lactams, ω-aminocarboxylic acids and/or equimolar combinations of diamine and dicarboxylic acid,
with the proviso that the amino group concentration of the graft copolymer is in the range from 100 to 2500 meq/kg,
where the sum of the parts by weight of I) and II) is 100,
where the crystallite melting points Tm of the individual components in the moulding composition have been shifted towards one another or become fully identical.

2. Metallic pipe according to Claim 1,
**characterized in that**
it is a flexible or rigid pipe which comprises the layer of the polyamide moulding composition as inliner or as a layer of a multilayered inliner.

3. Metallic pipe according to Claim 1,
**characterized in that**
it is a rigid pipe which comprises the layer of the polyamide moulding composition as external coating.

4. Metallic pipe according to any of the preceding claims,
**characterized in that**
the polyamide of component I has been produced using from 0.01 to 0.6 mol%, based on the entirety of the monomers used, of an at least trifunctional chain-transfer agent having functional groups which are carboxyl groups and/or amino groups or the respective derivatives thereof.

5. Metallic pipe according to Claim 4,
**characterized in that**
the polyamide of component I is produced with tricarboxylic acid and optionally also dicarboxylic acid as chain-transfer agent.

6. Metallic pipe according to Claim 4,
**characterized in that**
the polyamide of component I is produced with a mixture of triamine and dicarboxylic acid as chain-transfer agent.

7. Metallic pipe according to any of Claims 4 to 6,
**characterized in that**
in the polyamide of component I the concentration of the terminal carboxy groups is higher than the concentration of the terminal amino groups.

8. Metallic pipe according to any of Claims 4 to 6,
**characterized in that**
the polyamide moulding composition comprises from 0.005 to 10% by weight, calculated as a ratio to the polyamide content used, of a compound having at least two carbonate units.

9. Use of the metallic pipe according to any of Claims 1, 2 and 5 to 8 for conveying a hydrolyzing medium.

## Revendications

1. Tube métallique, qui contient une couche en un matériau de moulage polyamide, qui contient au moins 50 % en poids d'une fraction polyamide, qui est constituée par les composants suivants :
I) 60 à 98 parties en poids d'un polyamide, qui contient 10 à 70 méq./kg de groupes terminaux carboxyle et présente une viscosité en solution relative ηᵣₑₗ, déterminée selon ISO 307 en utilisant une solution à 0,5 % en poids dans du m-crésol à 25 °C, d'au moins 1,90, ainsi que
II) 2 à 40 parties en poids d'un copolymère greffé de polyamine-polyamide, qui est fabriqué à partir des monomères suivants :
a) 0,5 à 25 % en poids, par rapport à l'ensemble du mélange de monomères, d'une polyamine contenant au moins 4 atomes d'azote, ainsi que
b) 75 à 99,5 % en poids, par rapport à l'ensemble du mélange de monomères, de monomères formant un polyamide, choisis parmi les lactames, les acides ω-aminocarboxyliques et/ou les combinaisons équimolaires de diamine et d'acide dicarboxylique,
à condition que la concentration en groupes amino du copolymère greffé se situe dans la plage allant de 100 à 2 500 méq./kg,
la somme des parties en poids de I) et II) étant de 100, les points de fusion des cristallites Tₘ des composants individuels dans le matériau de moulage étant décalés les uns par rapport aux autres ou coïncidant.

2. Tube métallique selon la revendication 1, **caractérisé en ce qu'**il s'agit d'un tube flexible ou rigide, qui contient la couche du matériau de moulage polyamide sous la forme d'un revêtement intérieur ou sous la forme d'une couche d'un revêtement intérieur multicouche.

3. Tube métallique selon la revendication 1, **caractérisé en ce qu'**il s'agit d'un tube rigide, qui contient la couche du matériau de moulage polyamide sous la forme d'un revêtement extérieur.

4. Tube métallique selon l'une quelconque des revendications précédentes, **caractérisé en ce que** le polyamide du composant I a été fabriqué en utilisant 0,01 à 0,6 % en moles, par rapport à la totalité des monomères utilisés, d'un régulateur du poids moléculaire au moins trifonctionnel, dont les groupes fonctionnels sont des groupes carboxyle et/ou des groupes amino ou leurs dérivés.

5. Tube métallique selon la revendication 4, **caractérisé en ce que** le polyamide du composant I est fabriqué avec un acide tricarboxylique et éventuellement en outre un acide dicarboxylique en tant que régulateur du poids moléculaire.

6. Tube métallique selon la revendication 4, **caractérisé en ce que** le polyamide du composant I est fabriqué avec un mélange d'une triamine et d'un acide dicarboxylique en tant que régulateur du poids moléculaire.

7. Tube métallique selon l'une quelconque des revendications 4 à 6, **caractérisé en ce que**, dans le composant I du polyamide, la concentration des groupes terminaux carboxyle est supérieure à la concentration des groupes terminaux amino.

8. Tube métallique selon l'une quelconque des revendications 4 à 6, **caractérisé en ce que** le matériau de moulage polyamide contient 0,005 à 10 % en poids d'un composé contenant au moins deux unités carbonate, calculé par rapport à la fraction polyamide utilisée.

9. Utilisation du tube métallique selon l'une quelconque des revendications 1, 2 et 5 à 8 pour l'acheminement d'un milieu à activité d'hydrolyse.
